# EUROPÄISCHE PATENTSCHRIFT

(11) **EP 2 275 734 B1**
(45) Veröffentlichungstag und Bekanntmachung des Hinweises auf die Patenterteilung: **21.08.2013**
(21) Anmeldenummer: 09165475.6
(22) Anmeldetag: 15.07.2009
(51) Int. Cl.: F21S 8/12, F21V 7/00, F21V 14/04, F21W 101/10, F21Y 101/02

(54) **Beleuchtungseinheit für Fahrzeuge**
Lighting unit for vehicles
Unité d'éclairage pour véhicules

(43) Veröffentlichungstag der Anmeldung: 19.01.2011
(73) Patentinhaber: Hella KGaA Hueck & Co., 59552 Lippstadt (DE)
(72) Erfinder: Hagedorn, Susanne, 59558 Lippstadt (DE); Götz, Mirco, 59555 Lippstadt (DE); Kliebisch, Dirk, 33102 Paderborn (DE)

(56) Entgegenhaltungen:
- EP-A2- 1 452 795
- DE-A1-102008 011 647
- FR-A1- 2 913 752
- US-A1- 2002 167 817
- US-A1- 2004 223 338

## Beschreibung

Die Erfindung betrifft eine Beleuchtungseinheit für Fahrzeuge nach dem Oberbegriff des Patentanspruchs 1.

Aus der DE 102 36 825 A1 ist eine Beleuchtungseinheit für Fahrzeuge bekannt, die zur Erzeugung einer vorgegebenen Lichtfunktion (Lichtverteilung) einen rinnenförmigen Reflektor sowie eine Mehrzahl von demselben zugeordnete Lichtquellen aufweist. Die als LED-Leuchtelemente ausgebildeten Lichtquellen sind zwar beabstandet zueinander angeordnet, so dass sich Vorteile hinsichtlich der Entwärmung der Lichtquellen ergeben. Allerdings ist die bekannte Beleuchtungseinheit langgestreckt ausgebildet und weist somit keine kompakte Bauweise auf. Auch ist die bekannte Beleuchtungseinheit auf die Bereitstellung einer einzigen Lichtfunktion beschränkt.

Aus der EP 1 452 795 A2 ist eine Beleuchtungseinheit für Fahrzeuge mit einer Mehrzahl von beabstandet zueinander angeordneten Lichtquellen bekannt, die im Wesentlichen in einer gemeinsamen Ebene, aber nicht außenseitig an Reflektorsegmenten angeordnet sind. Es sind daher zusätzliche Maßnahmen für eine Wärmeableitung erforderlich.

Aus der DE 10 2008 011 647 A1 ist eine Beleuchtungseinheit für Fahrzeuge mit einer Mehrzahl von beabstandet zueinander angeordneten Lichtquellen und einem Reflektor bekannt ist. Die Lichtquellen sind an einem Außenumfangsbereich der Beleuchtungseinheit angeordnet, wobei jeder Lichtquelle ein Reflektorsegment des Reflektors zugeordnet ist. Dadurch, dass die Lichtquellen außenseitig angeordnet sind, ist die thermische Beanspruchung der Beleuchtungseinheit begrenzt.

Aufgabe der vorliegenden Erfindung ist es daher, eine Beleuchtungseinheit für Fahrzeuge derart weiterzubilden, dass zum einen eine möglichst geringe thermische Beanspruchung und zum anderen eine kompakte Bauweise der Beleuchtungseinheit gewährleistet ist.

Zur Lösung dieser Aufgabe weist die Erfindung die Merkmale des Patentanspruchs 1 auf.

Die Erfindung ermöglicht eine kompakte Bauweise der Beleuchtungseinheit, wobei durch eine räumlich verteilt angeordnete Anordnung von Lichtquellen eine Entwärmung der Lichtquellen einfacher zu verwirklichen ist. Nach der Erfindung ist der Reflektor segmentiert ausgebildet, wobei ein von einer ersten Lichtquelle abgestrahltes erstes Lichtbündel ausschließlich von einem ersten Reflektorsegment und ein von einer zweiten Lichtquelle abgestrahltes zweites Lichtbündel ausschließlich von einem zweiten Reflektorsegment reflektiert wird. Das erste Reflektorsegment wird somit ausschließlich von dem Lichtbündel der ersten Lichtquelle und das zweite Reflektorsegment ausschließlich von dem Lichtbündel der zweiten Lichtquelle erfasst. Es liegt somit eine eindeutige und definierte lichttechnische Kopplung zwischen einer einzigen Lichtquelle einerseits und einem Reflektorsegment andererseits vor.

Nach der Erfindung ist das erste Lichtmodul gebildet durch die erste Lichtquelle L₁ und das erste Reflektorsegment R₁. Das zweite Lichtmodul ist gebildet durch die zweite Lichtquelle L₂ und das zweite Reflektorsegment R₂. Das dritte Lichtmodul ist gebildet durch die dritte Lichtquelle L₃ und das dritte Reflektorsegment R₃. Das vierte Lichtmodul ist gebildet durch die vierte Lichtquelle L₄ und das vierte Reflektorsegment R₄.

Nach einer bevorzugten Ausführungsform der Erfindung ist eine erste Lichtquelle auf einer dem zweiten Reflektorsegment abgewandten Randseite des ersten Reflektorsegmentes angeordnet, so dass die erste Lichtquelle nicht innerhalb eines von der Beleuchtungseinheit in Hauptabstrahlrichtung abgestrahlten Gesamtlichtbündels liegt. Hierdurch kann ein relativ homogenes Gesamtlichtbündel abgestrahlt werden. Darüber hinaus wird durch diese räumliche Entzerrung der Lichtquellen der Aufwand für eine Entwärmung der Lichtquellen verringert.

Nach einer Weiterbildung der Erfindung sind die Reflektorsegmente derart gewölbt und relativ zueinander angeordnet, dass eine Randseite des ersten Reflektorsegmentes und/oder des zweiten Reflektorsegmentes als Blende dient, die verhindert, dass ein Teil des einem anderen Reflektorsegment zugeordneten Lichtquelle abgesandten Lichtes das eine Reflektorsegment erfassen kann. Somit dienen Teilflächen der Reflektorsegmente bzw. Randkonturen derselben zur Verhinderung der lichttechnischen Beeinflussung von Lichtquellen einerseits und denselben nicht zugeordneten Reflektorsegmenten andererseits.

Nach einer Weiterbildung der Erfindung ist mindestens eine Lichtquelle dimmbar ansteuerbar, so dass das durch die Lichtquelle und dem zugeordneten Reflektorsegment gebildet Lichtmodul zur Erzeugung unterschiedlicher Gesamtlichtverteilungen beitragen kann. Zum einen kann dieses Lichtmodul in einem nicht gedimmten Zustand der Lichtquelle zur Erzeugung einer erster eilung beitragen. Zum anderen kann dasselbe Lichtmodul in einem gedimmten Zustand zur Erzeugung einer zweiten Lichtverteilung (Gesamtlichtverteilung) beitragen. Durch Kombination einer Anzahl von Lichtmodulen, die jeweils über eine Lichtquelle in einem nicht gedimmten Zustand verfügt und Lichtmodulen, die jeweils über eine Lichtquelle mit einer gedimmten Funktion verfügt, kann somit eine Vielzahl von Gesamtlichtverteilungen erzeugt werden. Vorteilhaft kann dies durch einen relativ kompakten Aufbau der Beleuchtungseinheit realisiert werden.

Nach einer Weiterbildung der Erfindung sind die Lichtquellen jeweils mit einer Wärmesenke, insbesondere mit einer Kühlfläche verbunden, vorzugsweise sind die Lichtquellen in einem Randbereich der Reflektoranordnung angeordnet, so dass die erzeugte Wärme einfach abgeführt werden kann.

Nach einer Weiterbildung der Erfindung ist der Reflektor modulartig ausgebildet, wobei die jeweils einer einzigen Lichtquelle zugeordneten Reflektorsegmente in unterschiedlichen Relativpositionen zueinander anordbar sind. Vorteilhaft kann hierdurch in Abhängigkeit von dem Bauraumerfordernis des Fahrzeugs eine optimale Lichtausbeute erzielt werden.

Nach einer Weiterbildung der Erfindung ist mindestens eine Lichtquelle und/oder mindestens ein Reflektorsegment drehbar gelagert, so dass die Beleuchtungseinheit in Karosserieöffnungen unterschiedlicher Dimension montierbar ist.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Fig. 1: eine perspektivische Vorderansicht einer Beleuchtungseinheit nach einer ersten Ausführungsform,
- Fig. 2: eine perspektivische Vorderansicht der Beleuchtungseinheit nach einer zweiten Ausführungsform,
- Fig. 3a: eine schematische Vorderansicht eines Reflektors der Beleuchtungsein- heit nach der ersten Ausführungsform und
- Fig. 3b: eine schematische Darstellung von einer ersten Abblendlichtverteilung und einer zweiten Abblendlichtverteilung, die auf einem Messschirm abgebildet ist.

Eine erfindungsgemäße Beleuchtungseinheit kann vorzugsweise als Scheinwerfer in einem Kraftfahrzeug eingesetzt werden.

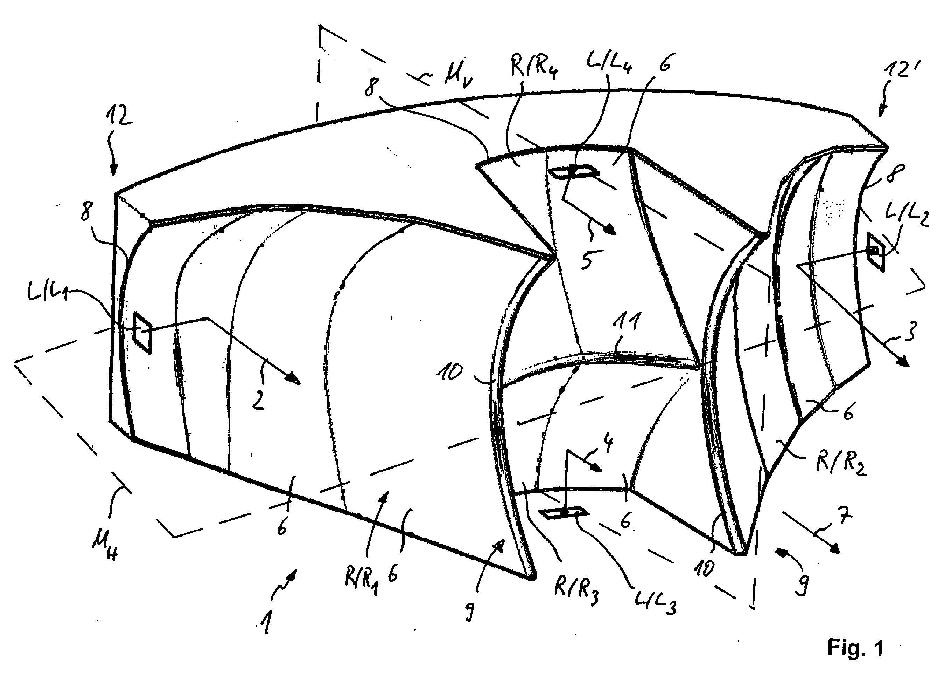

Nach einer ersten Ausführungsform der Erfindung gemäß Figur 1 ist eine Beleuchtungseinheit 1 vorgesehen, die einen Reflektor R (Reflektoranordnung) und eine Mehrzahl von Lichtquellen L aufweist. Die Lichtquellen L sind vorzugsweise als LED-Leuchtelemente bzw. LED-Chips ausgebildet.

Der Reflektor R ist segmentiert ausgebildet, wobei ein erstes Reflektorsegment R₁ einer ersten Lichtquelle L₁, ein zweites Reflektorsegment R₂ einer zweiten Lichtquelle L₂, ein drittes Reflektorsegment R₃ einer dritten Lichtquelle L₃ und ein viertes Reflektorsegment R₄ einer vierten Lichtquelle L₄ zugeordnet sind.

Die Reflektorsegmente sind so angeordnet, dass ein von der ersten Lichtquelle L₁ abgestrahltes erstes Lichtbündel 2 ausschließlich auf Reflexionsflächen 6 des ersten Reflektorsegmentes R₁, ein von der zweiten Lichtquelle L₂ abgestrahltes zweites Lichtbündel 3 ausschließlich auf Reflexionsflächen 6 des zweiten Reflektorsegmentes R₂, ein von der dritten Lichtquelle L₃ abgestrahltes Lichtbündel 4 ausschließlich auf Reflexionsflächen 6 des dritten Reflektorsegmentes R₃ und ein von der vierten Lichtquelle L₄ abgestrahltes viertes Lichtbündel 5 ausschließlich auf Reflexionsflächen 6 des vierten Reflektorsegmentes R₄ trifft und von dort in Hauptabstrahlrichtung 7 der Beleuchtungseinheit 1 reflektiert werden.

Die erste Lichtquelle L₁ und die zweite Lichtquelle L₂ erstrecken sich in einer gemeinsamen horizontalen Mittelebene M_{H}, wobei Hauptabstrahlrichtungen dieser beiden Lichtquellen L₁, L₂ zueinander gekehrt sind und jeweils senkrecht zur Hauptabstrahlrichtung 7 der Beleuchtungseinheit 1 verlaufen. Die Reflexionsflächen 6 des ersten Reflektorsegmentes R₁ und des zweiten Reflektorsegmentes R₂ sind derart geformt, dass eine erste Lichtverteilung (erste Lichtfunktion) erzeugt wird, beispielsweise eine Abblendlichtfunktion.

Die dritte Lichtquelle L₃ und die vierte Lichtquelle L₄ erstrecken sich in einer vertikalen Mittelebene M_{V} der Beleuchtungseinheit 1, wobei die Hauptabstrahlrichtungen der dritten Lichtquelle L₃ und der vierten Lichtquelle L₄ zueinander gekehrt und senkrecht zur Hauptabstrahlrichtung 7 der Beleuchtungseinheit 1 gerichtet sind. Die erste Lichtquelle L₁ und die zweite Lichtquelle L₂ erstrecken sich somit in einer gemeinsamen Horizontalebene, während die dritte Lichtquelle L₃ und die vierte Lichtquelle L₄ sich in einer gemeinsamen Vertikalebene erstrecken. Alternativ können die Hauptabstrahlrichtungen der Lichtquellen L₁, L₂, L₃, L₄, L₁', L₂', L₃' auch in einem spitzen Winkel zu der Hauptabstrahlrichtung 7 der Beleuchtungseinheit 1 verlaufen.

Die Reflexionsflächen 6 des dritten Reflektorsegmentes R₃ und des vierten Reflektorsegmentes R₄ sind so geformt, dass das von ihnen reflektierte dritte Lichtbündel 4 und vierte Lichtbündel 5 zur Erzeugung einer Fernlichtverteilung (Fernlichtfunktion) dient.

Die Lichtquellen L₁, L₂, L₃, L₄ erstrecken sich jeweils in einem Bereich zwischen einer hinteren Vertikalebene, in der sich ein hinterer Rand 8 der jeweils zugeordneten Reflektorsegmente R₁, R₂, R₃, R₄ erstreckt, und einer vorderen Vertikalebene, in der sich ein vorderer Rand 9 der entsprechenden Reflektorsegmente R₁, R₂, R₃, R₄ erstreckt.

Die Reflexionsflächen 6 des ersten Reflektorsegmentes R₁ und des zweiten Reflektorsegmentes R₂ laufen nach vorne hin so aus, dass eine vordere Randkante 10 (Randkontur) gebildet wird, die im Wesentlichen in vertikaler Richtung verläuft. Ferner laufen die Reflexionsflächen 6 des dritten Reflektorsegmentes R₃ und des vierten Reflektorsegmentes R₄ mittig zu einer vorderen Randkante 11 (Randkontur) zusammen, die im Wesentlichen bogenförmig in horizontaler Richtung verläuft. Die horizontale Randkante 11 bewirkt, dass das dritte Lichtbündel 4 nicht auf die Reflexionsfläche 6 des vierten Reflektorsegmentes R₄ und das vierte Lichtbündel 5 nicht auf die Reflexionsfläche 6 des dritten Reflektorsegmentes R₃ treffen kann. Die vertikalen Randkanten 10 bewirken, dass das erste Lichtbündel 2 nicht auf die Reflexionsflächen 6 der weiteren Reflektorsegmente R₂, R₃, R₄ bzw. das zweite Lichtbündel 3 nicht auf die Reflexionsflächen 6 der weiteren Reflektorsegmente R₁, R₃, R₄ treffen kann. Die Randkanten 10, 11 sowie die benachbarten Reflexionsflächen weisen somit eine abschattende Wirkung auf, die sicherstellt, dass auf die Reflexionsflächen 6 der Reflektorsegmente R₁, R₂, R₃, R₄ nur die Lichtbündel der jeweils zugeordneten Lichtquellen L₁, L₂, L₃, L₄ treffen kann.

Der Reflektor R ist einstückig ausgebildet und weist vorzugsweise in Umfangsrichtung einen mit Kühlrippen versehenen Kühlkörper auf, der in Hauptabstrahlrichtung 7 eine solche Erstreckung aufweist, dass die Lichtquellen L₁, L₂, L₃, L₄ jeweils innenseitig an dem Kühlkörper befestigt sind. Die Lichtquellen L₁, L₂, L₃, L₄ sind somit an einer Wärmesenke befestigt, so dass eine wirkungsvolle Wärmeabfuhr gewährleistet ist.

Wie aus Figur 1 zu ersehen ist, ist die erste Lichtquelle L₁ auf einer dem zweiten Reflektorsegment R₂ abgewandten Randseite 12 angeordnet. Die zweite Lichtquelle L₂ ist auf einer dem ersten Reflektorsegment R₁ abgewandten gegenüberliegenden Randseite 12' des zweiten Reflektorsegmentes R₂ angeordnet. Die erste Lichtquelle L₁ und die zweite Lichtquelle L₂ sind somit in einem relativ großen Abstand zueinander angeordnet. Entsprechend ist die dritte Lichtquellen L₃ und die vierte Lichtquelle L₄ gegenüberliegend an einer oberen Randseite bzw. unteren Randseite angeordnet.

In einer Variante der Beleuchtungseinheit 1 können die Lichtquellen L teilweise auch dimmbar angesteuert sein. Befindet sich die Lichtquelle in einem gedimmten Zustand, strahlt sie ein Lichtbündel mit einer verringerten Lichtstärke ab. Durch den Grad des Abdimmens kann die Lichtstärke bzw. die Helligkeitsabgabe eingestellt werden. Befindet sich die Lichtquelle L in einem nicht gedimmten Zustand, strahlt die Lichtquelle L ein Lichtbündel mit einer maximalen Lichtstärke bzw. mit einem maximalen Lichtstrom aus.

Durch teilweise Dimmung der Lichtquellen L der Beleuchtungseinheit 1 können nach einer Ausführungsform vier Gesamtlichtverteilungen erzeugt werden.

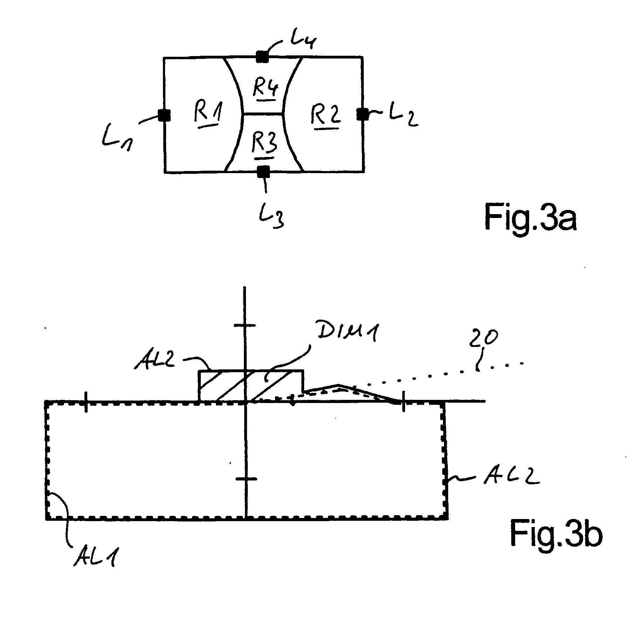

Zur Erzeugung einer ersten Abblendlichtverteilung AL1 (ECE-Abblendlichtverteilung) (in Figur 3b gestrichelt dargestellt) werden die erste Lichtquelle L₁ und die zweite Lichtquelle L₂ eingeschaltet, wobei sie sich in einem nicht gedimmten Zustand befinden. Es wird somit normale bzw. maximale Lichtstrom der Lichtquellen L₁, L₂ emittiert. Die dritte Lichtquelle L₃ und die vierte Lichtquelle L₄ sind ausgeschaltet.

Zur Erzeugung einer Fernlichtverteilung werden alle Lichtquellen L₁, L₂, L₃, L₄ eingeschaltet, wobei sie sich in einem nicht gedimmten Zustand befinden.

Zur Erzeugung einer zweiten Abblendlichtverteilung AL2 (SAE-Abblendlichtverteilung) (in Figur 3b als durchgezogene Linie gezeichnet) werden die erste Lichtquelle L₁ und die zweite Lichtquelle L₂ eingeschaltet, wobei sie sich jeweils in einem nicht gedimmten Zustand befinden. Während die vierte Lichtquelle L₄ ausgeschaltet ist, ist die dritte Lichtquelle L₃ in einem gedimmten Zustand, so dass zusätzlich oberhalb eines 15°-Anstiegs 20 in einem zentralen Bereich eine abgedimmte Teillichtverteilung DIM1 erzeugt wird. Die erste Teillichtverteilung DIM1 und die zweiten Lichtverteilung AL1 überlagen sich und bilden zusammen die Gesamtlichtverteilung AL2. Vorteilhaft kann hierdurch das Lichtmodul bestehend aus der ersten Lichtquelle L₁ und dem ersten Reflektorsegment R₁, der zweiten Lichtquelle L₂ und dem zweiten Reflektorsegment R₂ und der dritten Lichtquelle L₃ und dem dritten Reflektorsegment R₃ zum einen zur Erzeugung der Fernlichtverteilung und zum anderen zur Erzeugung der in den USA vorgeschriebenen Abblendlichtverteilung AL2 genutzt werden.
Zur Erzeugung einer Tagfahrlichtverteilung sind beispielsweise die zweite Lichtquelle L₂ und die dritte Lichtquelle L₃ eingeschaltet; befinden sich mithin in einem gedimmten Zustand. Die Lichtquellen L₁ und L₄ sind ausgeschaltet.Es kann somit beispielsweise aus zwei Lichtmodulen eine Tagfahrlichtfunktion erzeugt werden.

Nach einer nicht dargestellten Ausführungsform der Erfindung kann der Reflektor R auch modulartig ausgebildet sein, wobei die Reflektorsegmente R₁, R₂, R₃, R₄ in unterschiedlichen Relativpositionen zueinander anordbar sind. Beispielsweise können die Reflektorsegment R₁, R₂, R₃ und/oder R₄ drehbar bzw. die Lichtquellen L₁, L₂, L₃ und/oder L₄ drehbar gelagert sein, so dass eine Anpassung an die Dimension der vorgegebenen Karosserieöffnung gegeben ist. Insbesondere kann somit ein Ausgleich hinsichtlich der Randkontur der Reflektorsegmente R₁, R₂, R₃, R₄ erzielt werden, so dass derselbe Reflektor R bzw. dieselbe Beleuchtungseinheit 1 unter Ausbildung einer unterschiedlichen Neigung und/oder Pfeilung zu einer Vertikalebene in der Karosserieöffnung des Kraftfahrzeugs angeordnet werden kann.

Nach einer nicht dargestellten alternativen Ausführungsform kann auch lediglich eine einzige vertikale vordere Randkante 10 vorgesehen sein, so dass die Beleuchtungseinheit 1 lediglich die beiden Reflektorsegmente R₁ und R₂ aufweist.

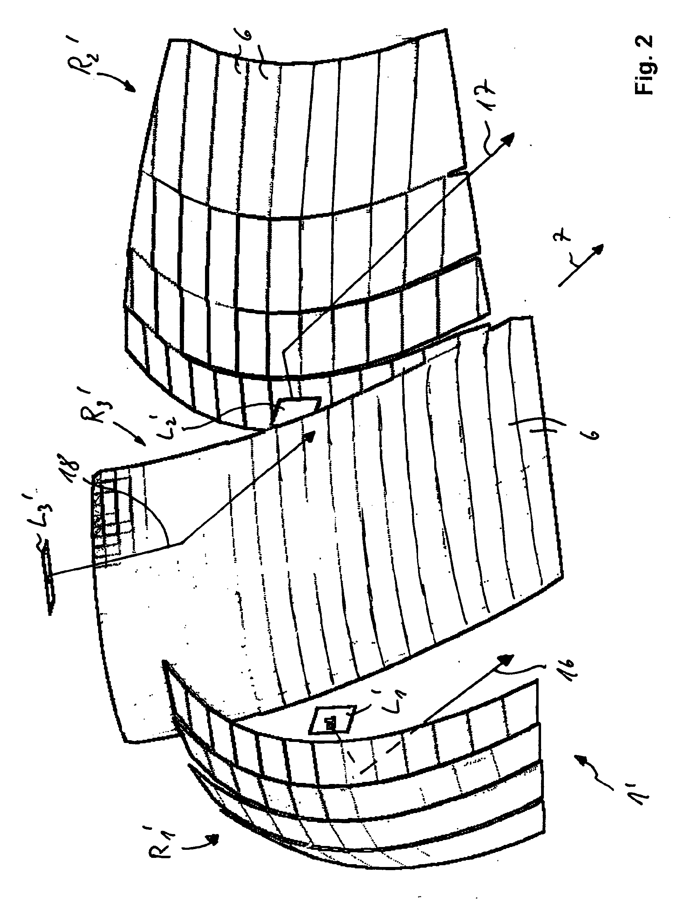

Nach einer weiteren Ausführungsform gemäß Figur 2 kann eine Beleuchtungseinheit 1' ein erstes Reflektorsegment R₁' sowie ein gegenüberliegendes zweites Reflektorsegment R₂' aufweisen, denen jeweils Lichtquellen L₁' bzw. L₂' zugeordnet sind. Im Unterschied zu der ersten Ausführungsform gemäß Figur 1 sind die Lichtquellen L₁', L₂' voneinander weggekehrt angeordnet, das heißt ein von der ersten Lichtquelle L₁' abgestrahltes erstes Lichtbündel 16 trifft auf Reflexionsflächen 6 des bezüglich einer vertikalen Mittelebene M_{V} weiter außen gelegenen ersten Reflektorsegmentes R₁', während ein von der zweiten Lichtquelle L₂' abgestrahltes zweites Lichtbündel 17 auf Reflexionsflächen 6 des bezüglich der vertikalen Mittelebene M_{V} weiter außen gelegenen zweiten Reflektorsegmentes R₂' trifft, wobei beide Lichtbündel 16, 17 zur Erzeugung einer Abblendlichtverteilung in Hauptabstrahlrichtung 7 reflektiert werden.

Gleiche Bauteile bzw. Bauteilfunktionen sind mit den gleichen Bezugsziffern versehen.

Im Unterschied zu der ersten Ausführungsform sind die Lichtquellen L₁' und L₂' innen, das heißt in einem Bereich zwischen dem ersten Reflektorsegment R₁' und dem dritten Reflektorsegment R₃' bzw. zwischen dem zweiten Reflektorsegment R₂' und dem dritten Reflektorsegment R₃' angeordnet.

Zwischen der ersten Lichtquelle L₁' und der zweiten Lichtquelle L₂' erstreckt sich lediglich das dritte Reflektorsegment R₃', das im Zusammenwirken mit der demselben zugeordneten dritten Lichtquelle L₃' als weitere Lichtfunktion eine Tagfahrlichtfunktion (Tagfahrlichtverteilung) erzeugt. Die dritte Lichtquelle L₃' ist in einem oberen Randbereich des Reflektors R' angeordnet. Dadurch, dass die Lichtquellen L₁' und L₂' entgegen gesetzte Hauptabstrahlrichtungen aufweisen, sind Maßnahmen zur Abschattung und Sicherstellung der lichttechnischen Entkopplung zwischen den Reflektorsegmenten R₁' und R₂' nicht erforderlich. Die dritte Lichtquelle L₃' sowie die Reflexionsflächen 6 des dritten Reflektorsegmentes R₃' sind so ausgelegt, dass das von ihnen abgegebene dritte Lichtbündel 18 nicht auf die Reflexionsflächen 6 des ersten Reflektorsegmentes R₁' und des zweiten Reflektorsegmentes R₂' trifft. Das erste Lichtbündel 16 und das zweite Lichtbündel 17 bilden somit jeweils Teillichtbündel, die als Gesamtlichtbündel die Abblendlichtverteilung erzeugen.

Nach einer nicht dargestellten alternativen Ausführungsform kann das mindestens eine mittlere Reflektorsegment R₃, R₄, R₃' so ausgelegt sein, dass eine Nebellichtverteilung oder eine Autobahnlichtverteilung erzeugt wird. Es können somit beliebige Lichtfunktionen miteinander kombiniert und bauraumsparend bereitgestellt werden.

Gegebenenfalls können die Lichtquellen L₁, L₂, L₃, L₄ Hauptabstrahlrichtungen aufweisen, die geneigt zu der Horizontalebene oder Vertikalebene verlaufen. Hierdurch ist eine Systemanpassung bei einer gepfeilten Kontur der Beleuchtungseinheit 1 bzw. der entsprechenden Karosserie des Kraftfahrzeugs gegeben.

### Bezugszeichenliste

- 1, 1': Beleuchtungseinheit
- 2: erstes Lichtbündel
- 3: zweites Lichtbündel
- 4: drittes Lichtbündel
- 5: viertes Lichtbündel
- 6: Reflexionsflächen
- 7: Hauptabstrahlrichtung
- 8: hinterer Rand
- 9: vorderer Rand
- 10: vordere Randkante
- 11: vordere Randkante
- 12, 12': Randseite
- 16: erstes Lichtbündel
- 17: zweites Lichtbündel
- 18: drittes Lichtbündel
- 20: 15°-Anstieg

- L, L₁, L₂, L₃, L₄: Lichtquelle
- M_{H}: horizontale Mittelebene
- Mv: vertikale Mittelebene
- R, R₁, R₂, R₃, R₄: Reflektor
- AL1: Abblendlichtverteilung
- AL2: Abblendlichtverteilung
- DIM1: Teillichtverteilung

## Patentansprüche

1. Beleuchtungseinheit für Fahrzeuge mit einer Mehrzahl von beabstandet zueinander angeordneten Lichtquellen (L, L₁, L₂, L₃, L₄), denen ein Reflektor (R₁, R₂, R₃, R₄) zugeordnet ist zur Erzeugung einer vorgegebenen Lichtverteilung, , dass der Reflektor (R,) derart segmentiert ausgebildet ist, dass die Lichtquellen (L, L₁, L₂, L₃, L₄,) jeweils unterschiedlichen Reflektorsegmenten (1R, R₂, R₃, R₄,) zugeordnet sind, wobei ein von einer ersten Lichtquelle (L₁,) abgestrahltes erstes Lichtbündel (2, 16) ausschließlich von einem ersten Reflektorsegment (R₁, R₁') und ein von einer zweiten Lichtquelle (L₂,) abgestrahltes zweites Lichtbündel (3, 17) ausschließlich von einem zweiten Reflektorsegment (R₂, R₂') reflektiert wird, **dadurch gekennzeichnet, dass** ein von einer dritten Lichtquelle (L₃) abgestrahltes drittes Lichtbündel (4) ausschließlich von einem dritten Reflektorsegment (R₃) und ein von einer vierten Lichtquelle (L₄) abgestrahltes viertes Lichtbündel (5) ausschließlich von einem vierten Reflektorsegment (R₄) reflektiert wird, dass die erste Lichtquelle (L₁) und die zweite Lichtquelle (L₂) in einer gemeinsamen Horizontalebene (M_{H}) angeordnet sind, wobei Hauptabstrahlrichtungen dieser beiden Lichtquellen (L₁, L₂) zueinander gekehrt sind und jeweils senkrecht zur Hauptabstrahlrichtung (7) verlaufen, dass die dritte Lichtquelle (L₃) und die vierte Lichtquelle (L₄) in einer gemeinsamen Vertikalebene (Mv) angeordnet sind, wobei die Hauptabstrahlrichtungen der dritten Lichtquelle (L₃) und der vierten Lichtquelle (L₄) zueinander gekehrt und senkrecht zur Hauptabstrahlrichtung (7) der Beleuchtungseinheit (1) gerichtet sind, wobei sich das erste Reflektorsegment (R₁) und das zweite Reflektorsegment (R₂) und das dritte Reflektorsegment (R₃) und/oder das vierte Reflektorsegment (R₄) bis zu einer auf einer der ersten Lichtquelle (L₁) bzw. zweiten Lichtquelle (L₂) abgewandten Randkante (10, 11) so weit in Hauptabstrahlrichtung (7) der Beleuchtungseinheit (1) nach vorne erstrecken, dass das von der ersten Lichtquelle (L₁) und der zweiten Lichtquelle (L₂) abgesandte Lichtbündel (2, 3) nicht von Reflexionsflächen (6) des zweiten Reflektorsegmentes (R₂) bzw. des ersten Reflektorsegmentes (R₁) erfasst wird und dass das von der dritten Lichtquelle (L₃) und/oder der vierten Lichtquelle (L₄) abgesandte Lichtbündel (4, 5) nicht von Reflexionsflächen (6) des vierten Reflektorsegmentes (R₄) bzw. des dritten Reflektorsegmentes (R₃) sowie dem ersten Reflektorsegment (R₁) und dem zweiten Reflektorsegment (R₂) erfasst wird.

2. Beleuchtungseinheit nach Anspruch 1, **dadurch gekennzeichnet, dass** mindestens eine Lichtquelle (L₁, L₃) dimmbar ansteuerbar ist, derart, dass von der Lichtquelle (L₁, L₃) ein Lichtbündel mit einem verringerten Lichtstrom emittiert wird zur Erzeugung einer ersten Teillichtverteilung, die sich mit einer weiteren Lichtverteilung oder Teillichtverteilung zu einer vorgegebenen Gesamtlichtverteilung überlagert, wobei die weitere Lichtverteilung oder die weitere Teillichtverteilung durch ein Lichtbündel einer weiteren Lichtquelle (L₂, L₄) gebildet ist, die gedimmt oder nicht gedimmt angesteuert ist.

3. Beleuchtungseinheit nach Anspruch 1 oder 2, **dadurch gekennzeichnet, dass** die dimmbare Lichtquelle (L₁, L₃) zum einen im nicht gedimmten Zustand ein Lichtbündel emittiert zur Bildung einer Teillichtverteilung für eine erste Gesamtlichtverteilung und zum anderen in einem gedimmten Zustand ein Lichtbündel emittiert zur Bildung einer Teillichtverteilung für eine andere Gesamtlichtverteilung.

4. Beleuchtungseinheit nach einem der Ansprüche 1 bis 3, **dadurch gekennzeichnet, dass** die Lichtquellen (L₁, L₂, L₃, L₄, L₁', L₂', L₃') derart angeordnet sind, dass Hauptabstrahlrichtungen der Lichtquellen (L₁, L₂, L₃, L₄, L₁', L₂', L₃') jeweils senkrecht oder in einem spitzen Winkel zu einer Hauptabstrahlrichtung (7) der Beleuchtungseinheit (1, 1') verläuft.

5. Beleuchtungseinheit nach einem der Ansprüche 1 bis 4, **dadurch gekennzeichnet, dass** die erste Lichtquelle (L₁, L₂, L₁') auf einer dem zweiten Reflektorsegment (R₂, R₂') abgewandten Randseite (12, 12') des ersten Reflektorsegmentes (R₁, R₁') angeordnet ist.

6. Beleuchtungseinheit nach einem der Ansprüche 1 bis 5, **dadurch gekennzeichnet, dass** die Lichtquellen (L₁, L₂, L₃, L₄, L₃') jeweils mit einer Wärmesenke verbunden sind.

7. Beleuchtungseinheit nach einem der Ansprüche 1 bis 6, **dadurch gekennzeichnet, dass** der Reflektor (R') modulartig ausgebildet ist, wobei die jeweils einer einzigen Lichtquelle (L₁', L₂', L₃') zugeordneten Reflektorsegmente (R₁', R₂', R₃') in unterschiedlichen Relativpositionen zueinander anordbar sind.

8. Beleuchtungseinheit nach einem der Ansprüche 1 bis 7, **dadurch gekennzeichnet, dass** mindestens eine Lichtquelle (L) und/oder mindestens ein Reflektorsegment (R) drehbar gelagert ist.

9. Beleuchtungseinheit nach einem der Ansprüche 1 bis 8, **dadurch gekennzeichnet, dass** mindestens zwei Lichtquellen (L₁, L₂, L₃, L₄, L₁', L₂') bezüglich einer Mittelebene (M_{H}, Mv) zueinander gekehrt oder voneinander weggekehrt angeordnet sind.

10. Beleuchtungseinheit nach einem der Ansprüche 1 bis 9, **dadurch gekennzeichnet, dass** mindestens zwei Lichtquellen (L₁, L₂, L₃, L₄, L₁', L₂') Hauptabstrahlrichtungen aufweisen, die in einer gemeinsamen Horizontalebene oder in einer gemeinsamen Vertikalebene oder geneigt zu der Horizontalebene und/oder der Vertikalebene verlaufen.

11. Beleuchtungseinheit nach einem der Ansprüche 1 bis 10, **dadurch gekennzeichnet, dass** zwischen dem ersten Reflektorsegment (R₁, R₁') und dem zweiten Reflektorsegment (R₂, R₂') mindestens ein drittes Reflektorsegment (R₃, R₄, R₃') angeordnet ist, dem eine dritte Lichtquelle (L₃, L₃') zugeordnet ist zur Erzeugung einer zweiten Lichtverteilung.

12. Beleuchtungseinheit nach einem der Ansprüche 1 bis 11, **dadurch gekennzeichnet, dass** die Lichtquellen (L₁, L₂, L₃, L₄, L₁', L₂', L₃') in Hauptabstrahlrichtung (7) der Beleuchtungseinheit (1, 1') in einem Bereich zwischen einer hinteren Vertikalebene, in der sich ein hinterer Rand (8) des zugeordneten Reflektorsegmentes (R₁, R₂, R₃, R₄, R₁', R₂', R₃') erstreckt, und einer vorderen Vertikalebene, in der sich ein vorderer Rand (9) des zugeordneten Reflektorsegmentes (R₁, R₂, R₃, R₄, R₁', R₂', R₃') erstreckt, angeordnet sind.

13. Beleuchtungseinheit nach einem der Ansprüche 1 bis 12, **dadurch gekennzeichnet, dass** die erste Lichtquelle (L₁, L'₁) und die zweite Lichtquelle (L₂, L₂') sowie das erste Reflektorsegment (R₁, R₁') und das zweite Reflektorsegment (R₂, R₂') zur Erzeugung einer Abblendlichtverteilung und dass mindestens das dritte Reflektorsegment (R₃, R₄, R₃') zur Erzeugung einer Fernlichtverteilung oder einer Tagfahrlichtverteilung oder einer Nebellichtverteilung oder einer Autobahnlichtverteilung ausgelegt sind.

14. Beleuchtungseinheit nach einem der Ansprüche 1 bis 13, **dadurch gekennzeichnet, dass** mindestens ein Reflektorsegment (R) eine Randkontur aufweist, die geneigt und/oder gepfeilt zu einer Vertikalebene angeordnet ist.

15. Beleuchtungseinheit nach einem der Ansprüche 1 bis 14, **dadurch gekennzeichnet, dass** die Lichtquellen (L) als LED-Leuchtelemente oder LED-Chips ausgebildet sind.

## Claims

1. Lighting unit for vehicles with a multitude of light sources (L, L₁, L₂, L₃, L₄) arranged spaced relative to one another, to which a reflector (R₁, R₂, R₃, R₄) is assigned, for the generation of a given light distribution, wherein the reflector (R,) is segmented in such a manner, that the light sources (L, L₁, L₂, L₃, L₄) are each assigned to different reflector segments (R₁, R₂, R₃, R₄), wherein a first light beam (2, 16) radiated from a first light source (L₁,) is reflected exclusively from a first reflector segment (R₁, R1'), and a second light beam (3, 17) radiated from a second light source (L₂,) is reflected exclusively from a second reflector segment (R₂,R₂'), **characterized in that** a third light beam (4) radiated from a third light source (L₃,) is reflected exclusively from a third reflector segment (R₃), and a fourth light beam (5) radiated from a fourth light source (L₄,) is reflected exclusively from a fourth reflector segment (R₄), and **in that** the first light source (L₁) and the second light source (L₂) are arranged on a common horizontal plane, wherein the main radiation directions of these two light sources (L₁, L₂) are oriented towards one another and each perpendicular to the main radiation direction (7), and that the third light source (L₃) and the fourth light source (L₄) are arranged on a common vertical plane (Mv), wherein the main radiation directions of the third light source (L₃) and the fourth light source (L₄) are oriented towards one another and perpendicular to the main radiation direction (7) of the lighting unit (1), wherein the first reflector segment (R₁) and the second reflector segment (R₂) and the third reflector segment (R₃) and/or the fourth reflector segment (R₄) extend so far to the front in the main radiation direction (7) of the light unit (1) to an outer edge (10, 11) facing away from a first light source (L₁) and/or a second light source (L₂), that the light beams (2, 3) radiated from the first light source (L₁) and the second light source (L₂) are not caught by reflecting surfaces (6) of the second reflector segment (R₂) and/or the first reflector segment (R₁) and that the light beams (4,5) radiated from the third light source (L₃) and the fourth light source (L₄) are neither caught by reflecting surfaces (6) of the fourth reflector segment (R₄) and/or the third reflector segment (R₃) nor by the first reflector segment (R₁) and/or the second reflector segment (R₂).

2. Lighting unit according to Claim 1, **characterized in that** at least one light source (L₁, L₃) can be dimmably controlled, so that the light source (L₁, L₃) emits a light beam with a reduced luminous flux for the generation of a first partial light distribution overlapping with a further light distribution or partial light distribution to form a given total light distribution, wherein the further light distribution or the further partial light distribution is generated by a light beam of a further light source (L₂, L₄) which is dimmably or not dimmably controlled.

3. Lighting unit according to Claim 1 or 2, **characterized in that** the dimmable light source (L₁, L₃), in the undimmed state, emits a light beam for the generation of a partial light distribution for a first total light distribution, and in the dimmed state, emits a light beam for the generation of a partial light distribution for another total light distribution.

4. Lighting unit according to one of the Claims 1 to 3, **characterized in that** the light sources (L₁, L₂, L₃, L₄, L₁', L₂', L₃') are arranged so that main radiation directions of the light sources (L₁, L₂, L₃, L₄, L₁', L₂', L₃') run perpendicular or at an acute angel to a main radiation direction (7) of the lighting unit (1, 1').

5. Lighting unit according to one of the Claims 1 to 4, **characterized in that** the first light source (L₁, L₂, L₁') is arranged on a lateral side (12, 12') of the first reflector segment (R₁, R₂) facing away from the second reflector segment (R₂, R₂').

6. Lighting unit according to one of the Claims 1 to 5, **characterized in that** the light sources (L₁, L₂, L₃, L₄, L₃') are each connected to a heatsink.

7. Lighting unit according to one of the Claims 1 to 6, **characterized in that** the reflector (R') has a modular design, wherein the reflector segments (R₁', R₂', R₃') which are each assigned to a single light source (L₁', L₂', L₃') can be arranged in different positions relative to one another.

8. Lighting unit according to one of the Claims 1 to 7, **characterized in that** at least one light source (L) and/or at least one reflector segment (R) is pivoted.

9. Lighting unit according to one of the Claims 1 to 8, **characterized in that** at least two light sources (L₁, L₂, L₃, L₄, L₁', L₂') are arranged facing each other or facing away from each other with regard to a center plane (M_{H}, M_{V}).

10. Lighting unit according to one of the Claims 1 to 9, **characterized in that** at least two light sources (L₁, L₂, L₃, L₄, L₁', L₂') have main radiating directions running in a common horizontal plane or in a common vertical plane or running inclined toward the horizontal plane and/or the vertical plane.

11. Lighting unit according to one of the Claims 1 to 10, **characterized in that** between the first reflector segment (R₁, R₁') and the second reflector segment (R₂, R₂'), at least a third reflector segment (R₃, R₄, R₃') is arranged, to which a third light source (L₃, L₃') is assigned for the generation of a second light distribution.

12. Lighting unit according to one of the Claims 1 to 11, **characterized in that** the light sources (L₁, L₂, L₃, L₄, L₁, L₂', L₃') are arranged in the main radiation direction (7) of the lighting unit (1, 1') in an area between a rear vertical plane in which a rear edge (8) of the assigned reflector segment (R₁, R₂, R₃, R₄, R₁', R₂', R₃') extends, and a front vertical plane in which a front edge (9) of the assigned reflector segment (R₁, R₂, R₃, R₄, R₁', R₂', R₃') extends.

13. Lighting unit according to one of the Claims 1 to 12, **characterized in that** the first light source (L₁, L₁') and the second light source (L₂, L₂') as well as the first reflector (R₁, R₁') and the second reflector segment (R₂, R₂') are designed for the generation of a low beam light distribution, and that at least the third reflector segment (R₃, R₄, R₃') is designed for the generation of a high beam light distribution or a daytime running light distribution or a fog light distribution or a motorway light distribution.

14. Lighting unit according to one of the Claims 1 to 13, **characterized in that** at least one reflector segment (R) has an edge contour being arranged at horizontal and vertical inclination (rake and sweep) angles relative to a vertical plane.

15. Lighting unit according to one of the Claims 1 to 14, **characterized in that** the light sources (L) are embodied as LED light elements or LED chips.

## Revendications

1. Unité d'éclairage pour véhicules automobiles avec une multitude de sources de lumière (L, L₁, L₂, L₃, L₄) distantes l'une de l'autre auxquelles un réflecteur (R₁, R₂, R₃, R₄) est affecté pour générer une répartition lumineuse prédéterminée, que le réflecteur (R) est réalisé de manière segmenté et de telle façon que les sources de lumière (L, L₁, L₂, L₃, L₄) soient attribuées chaque fois aux différents segments de réflecteur (R₁, R₂, R₃, R₄), un premier faisceau de lumière (2, 16) émis d'une première source de lumière (L₁,) étant reflété uniquement par un premier segment de réflecteur (R₁, R₁') et un deuxième faisceau de lumière (3, 17) émis d'une deuxième source de lumière (L₂,) étant reflété uniquement par un deuxième segment de réflecteur (R₂, R₂'),
**caractérisée en ce**
**qu'**un troisième faisceau de lumière (4) émis d'une troisième source de lumière (L₃) étant reflété uniquement par un troisième segment de réflecteur (R₃) et un quatrième faisceau de lumière (5) émis d'une quatrième source de lumière (L₄) étant reflété uniquement par un quatrième segment de réflecteur (R₄), que la première source de lumière (L₁) et la deuxième source de lumière (L₂) sont disposées sur un plan horizontal commun (M_{H}), les sens principaux de faisceau de ces deux sources de lumière (L₁, L₂) sont orientés l'un vers l'autre et s'écoulent chaque fois perpendiculairement au sens principal de faisceau (7), que la troisième source de lumière (L₃) et la quatrième source de lumière (L₄) sont disposées sur un plan vertical commun (M_{V}), les sens principaux de faisceau de la troisième source de lumière (L₃) et de la quatrième source de lumière (L₄) étant orientés l'un vers l'autre et perpendiculairement au sens principal de faisceau (7) de l'unité d'éclairage (1), le premier segment de réflecteur (R₁) et le deuxième segment de réflecteur (R₂) et le troisième segment de réflecteur (R₃) et/ou le quatrième segment de réflecteur (R₄) s'étendant jusqu'à un bord marginal (10, 11) détourné de la première source de lumière (L₁) respectivement deuxième source de lumière (L₂) de telle manière vers l'avant au sens principal de faisceau (7) de l'unité d'éclairage (1) que le faisceau de lumière (2, 3) émis de la première source de lumière (L₁) et de la deuxième source de lumière (L₂) ne soit pas saisi par les surfaces réfléchissantes (6) du deuxième segment de réflecteur (R₂) respectivement du premier segment de réflecteur (R₁) et que le faisceau de lumière (4, 5) émis de la troisième source de lumière (L₃) et/ou de la quatrième source de lumière (L₄) ne soit pas saisi par les surfaces réfléchissantes (6) du quatrième segment de réflecteur (R₄) respectivement du troisième segment de réflecteur (R₃) et aussi du premier segment de réflecteur (R₁) et du deuxième segment de réflecteur (R₂).

2. Unité d'éclairage selon la revendication 1, **caractérisée en ce qu'**au moins une source de lumière (L₁, L₃) peut être commandée de manière réglable et de telle façon qu'un faisceau de lumière soit émis par la source de lumière (L₁, L₃) à un flux lumineux réduit pour générer une première répartition lumineuse qui se superpose avec une autre répartition lumineuse ou répartition lumineuse partielle à une répartition lumineuse totale prédéterminée, l'autre répartition lumineuse ou l'autre répartition lumineuse partielle étant formée par un faisceau lumineux d'une autre source lumineuse (L₂, L₄) qui sera commandée de manière réglable ou non réglable.

3. Unité d'éclairage selon la revendication 1 ou 2, **caractérisée en ce que** la source de lumière (L₁, L₃) réglable émet d'une part en état non réglable un faisceau lumineux pour former une répartition lumineuse partielle pour une première répartition lumineuse totale et d'autre part elle émet en état réglable un faisceau lumineux pour former une répartition lumineuse partielle pour une autre répartition lumineuse totale.

4. Unité d'éclairage selon l'une des revendications 1 à 3, **caractérisée en ce que** les sources de lumière (L₁, L₂, L₃, L₄, L₁', L₂', L₃') sont disposées de telle manière que les sens principaux de faisceau des sources de lumière (L₁, L₂, L₃, L₄, L₁', L₂', L₃') s'écoulent chaque fois perpendiculairement ou dans un angle aigu par rapport à un sens principal de faisceau (7) de l'unité d'éclairage (1, 1').

5. Unité d'éclairage selon l'une des revendications 1 à 4, **caractérisée en ce que** la première source de lumière (L₁, L₂, L₁') est disposée sur un bord marginal (12, 12') du premier segment de réflecteur (R₁, R₁') détourné du deuxième segment de réflecteur (R₂, R₂').

6. Unité d'éclairage selon l'une des revendications 1 à 5, **caractérisée en ce que** les sources de lumière (L₁, L₂, L₃, L₄, L₃') sont reliées chaque fois à un dissipateur thermique.

7. Unité d'éclairage selon l'une des revendications 1 à 6, **caractérisée en ce que** le réflecteur (R') est de forme modulaire, les segments de réflecteur (R₁', R₂', R₃') affectés chaque fois à une seule source de lumière (L₁', L₂', L₃') étant disposables les uns vers les autres dans les différentes positions relatives.

8. Unité d'éclairage selon l'une des revendications 1 à 7, **caractérisée en ce qu'**au moins une source de lumière (L) et/ou au moins un segment de réflecteur (R) est pivotant.

9. Unité d'éclairage selon l'une des revendications 1 à 8, **caractérisée en ce qu'**au moins deux sources de lumière (L₁, L₂, L₃, L₄, L₁', L₂') sont disposées en rapport avec le plan moyen (M_{H}, M_{V}) l'une vers l'autre ou écartée l'une de l'autre.

10. Unité d'éclairage selon l'une des revendications 1 à 9, **caractérisée en ce qu'**au moins deux sources de lumière (L₁, L₂, L₃, L₄, L₁', L₂') présentent des sens principaux de faisceau qui s'écoulent dans un plan horizontal commun ou dans un plan vertical commun ou inclinés au plan horizontal et/ou au plan vertical.

11. Unité d'éclairage selon l'une des revendications 1 à 10, **caractérisée en ce qu'**entre le premier segment de réflecteur (R₁, R₁') et le deuxième segment de réflecteur (R₂, R₂') est disposé au moins un troisième segment de réflecteur (R₃, R4, R₃') auquel est attribué une troisième source de lumière (L₃, L₃') pour générer une deuxième répartition lumineuse.

12. Unité d'éclairage selon l'une des revendications 1 à 11, **caractérisée en ce que** les sources de lumière (L₁, L₂, L₃, L₄, L₁', L₂', L₃') sont disposées au sens principal de faisceau (7) de l'unité d'éclairage (1, 1') dans une zone entre un plan vertical arrière dans lequel s'étend un bord arrière (8) du segment de réflecteur attribué (R₁, R₂, R₃, R₄, R₁', R₂', R₃') et un plan vertical avant dans lequel s'étend un bord avant (9) du segment de réflecteur attribué (R₁, R₂, R₃, R₄, R₁', R₂', R₃').

13. Unité d'éclairage selon l'une des revendications 1 à 12, **caractérisée en ce que** la première source de lumière (L₁, L₁') et la deuxième source de lumière (L₂, L₂') ainsi que le premier segment de réflecteur (R₁, R₁') et le deuxième segment de réflecteur (R₂, R₂') sont conçus pour générer une répartition lumineuse d'un feu code et qu'au moins le troisième segment de réflecteur (R₃, R4, R₃') est conçu pour générer une répartition lumineuse d'un feu de route ou d'un feu de diurne ou d'un feu antibrouillard ou d'un feu d'autoroute.

14. Unité d'éclairage selon l'une des revendications 1 à 13, **caractérisée en ce qu'**au moins un segment de réflecteur (R) présente un contour marginal qui est disposé de manière inclinée ou de flèche par rapport à un plan vertical.

15. Unité d'éclairage selon l'une des revendications 1 à 14, **caractérisée en ce que** les sources de lumière (L) se présentent sous forme d'éléments lumineux à LED ou de puces à LED.
